(19) **Europäisches Patentamt / European Patent Office / Office européen des brevets**

(11) **EP 1 887 820 B1**

(12) **EUROPEAN PATENT SPECIFICATION**

(45) Date of publication and mention of the grant of the patent:
**04.10.2017 Bulletin 2017/40**

(51) Int Cl.:
*G01S 5/02* *(2010.01)*    *H04W 24/02* *(2009.01)*
*H04W 8/12* *(2009.01)*    *H04W 16/18* *(2009.01)*

(21) Application number: **06291315.7**

(22) Date of filing: **11.08.2006**

(54) **Apparatus and method to identify the location of a radio cell**

Vorrichtung und Verfahren zur Erkennung der Lage einer Funknetzzelle

Dispositif et système de reconnaissance de la position d'une cellule radio

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**13.02.2008 Bulletin 2008/07**

(73) Proprietor: **Orange**
**75015 Paris (FR)**

(72) Inventors:
• **Gillot, David**
**1160 Brussels (BE)**
• **Verzele, François**
**7700 Mouscron (BE)**
• **Balon, Marc**
**1495 Villers-La-Ville (BE)**

(74) Representative: **Cabinet Plasseraud**
**66, rue de la Chaussée d'Antin**
**75440 Paris Cedex 09 (FR)**

(56) References cited:
**WO-A-02/071781**    **GB-A- 2 415 576**
**US-A1- 2002 082 017**

## Description

### Field of the Invention

The present invention relates to a telecommunications apparatus and method for identifying a geographical location of radio-coverage cells within a mobile access network.

The present invention also relates to a telecommunications apparatus and method for identifying network traffic associated with a transport route.

### Background of the Invention

In a mobile network environment, such as a GSM (Global System for Mobile communications) network environment, radio coverage is an important factor. The more extensive the radio coverage provided by a mobile radio network, the greater the likelihood that a mobile node will select that mobile radio network for attachment and for providing a communications session. To some degree an operator can determine weaknesses in their own mobile radio network based on a detailed knowledge of the location of network components, and in particular radio transceivers, within the mobile radio network and also based on the topography of the country or region in which the mobile radio network exists. However, in order to increase the likelihood of capturing inbound roamers, the radio coverage provided by the mobile radio network should be increased relative to the radio coverage provided by competing mobile radio networks. While the operator of a mobile radio network will have access to detailed information about the radio coverage in his own mobile radio network, he will not have access to such detailed information in respect of the radio coverage provided by competing mobile radio networks.

GB-A-2415576 describes a method of determining adjacency of cell cites using a movable base transceiver station (BTS).

WO-A-02071781 describes a method of determining the location of cell sites in a cellular mobile network using a special test telephone, which is able to determine its geographical location provided in the form of longitude/latitude data, or Eastings/Northings data.

US-A-2002082017 describes a mobile station that will initiate a so called "handoff" operation when the distance between the mobile station and the base station to which it is attached becomes larger than a given threshold value. The mobile station "senses" its own position.

### Summary of Invention

According to an aspect of the present invention, a telecommunications system provides a facility for mobile nodes to communicate via one or more mobile radio networks. The telecommunications system comprises a data processor which is operable to detect a communication from a mobile node via a first radio-coverage cell at a first time and to detect a communication from the mobile node via a second radio-coverage cell at a second time. The data processor is then able to determine that the difference between the second time and the first time is less than a predetermined value, and if so to identify the location of the first radio-coverage cell based on knowledge of the location of the second radio-coverage cell.

In this way, communications made within a predetermined time of each other on the same mobile node but via different radio-coverage cells can be used to identify the location of one of those radio-coverage cells from the known location of the other of the radio-coverage cells.

The identity of the radio-coverage cells used to support the communications session could be provided from the visited network to the home network as signalling messages, for instance SS7 (Signalling System No. 7) signalling messages, produced as a result of the communications session, or could alternatively be provided from the visited network to the home network in the form of a Transferred Account Procedure (TAP) file communicated from the home network to the visited network as part of the billing procedure in respect of the communications session.

The indication of the identity of the cell may be provided to the home network as a result of a communications session which is provided to the mobile node by the visited mobile access network and may indicate the cell to which the mobile node was affiliated during that communications session. In this case, the received indication of the geographical location associated with the mobile node will be received from the home network and will include a geographical location of a known radio-coverage cell to which the mobile node was affiliated during a further communications session provided to the mobile node within a predetermined time period before or after the communications session during which the mobile node was affiliated with the unknown radio-coverage cell.

In this way, a network operator is able to use mobile nodes subscribed to his own network or a partner network, to analyse the radio coverage of a competing mobile access network. In particular, the locations of radio-coverage cells within competing networks can be identified and used to enable the analysis of the competing network on a network-wide or regional basis.

In some embodiments, the estimate of the location of a cell may be improved by identifying communications made on a cell with an unknown location within a predetermined time of a plurality of communications made on known cells. By determining a plurality of estimated geographical locations for the unknown radio cell from a corresponding plurality of known radio-coverage cells, and by calculating an average of the estimated geographical locations for the unknown radio-coverage cell, an improved estimated geographical location for the unknown radio-coverage cell can be generated.

According to another aspect of the invention, a telecommunications system provides a facility for mobile nodes to communicate via one or more mobile radio networks, the mobile nodes being subscribed to a home network and visiting a visited network. The telecommunications system comprises a data processing apparatus which is operable to detect a first area update message which is generated when a mobile node subscribed to the home network becomes affiliated to a radio-coverage cell associated with one of a first predetermined list of visitor location registers and which is communicated to the home location register of the home network of the mobile node, the first predetermined list of visitor location registers being associated with a first location. The data processing apparatus is also operable to detect a second area update message which is generated when the mobile node becomes affiliated to a radio-coverage cell associated with one of a second predetermined list of visitor location registers and which is communicated to the home location register of the home network, the second predetermined list of visitor location registers being associated with a second location. Based on the two area update messages, the data processing apparatus is able to determine a time difference between the generation of the first area update message and the generation of the second area update message and to identify whether the mobile node is associated with a particular route or region in accordance with the determined time difference.

In this way, it is possible to identify, for example, a market segment of a transport route corresponding to those mobile nodes which transit between two predetermined locations, associated with the first and second visitor location registers, as would be the case for instance for passengers using mobile terminals and travelling on the same train, road, boat or aircraft trip. The market share for multiple operators can then be analysed in respect of the train, road, boat, airport or region segment. In another example a market share for a particular region can be determined by arranging for the first and the second visitor location registers to correspond with a region or vicinity of interest.

Various further aspects and features of the present invention are defined in the appended claims.

### Brief Description of the Drawings

Embodiments of the present invention will now be described by way of example only with reference to the accompanying drawings where like parts are provided with corresponding reference numerals and in which:

Figure 1 schematically illustrates a telecommunications system operating in accordance with a first embodiment of the invention;

Figure 2 schematically illustrates a telecommunications system operating in accordance with a second embodiment of the invention;

Figure 3 schematically illustrates the handover of a mobile node between multiple visited networks;

Figure 4 schematically illustrates a method of determining adjacent radio-coverage cells;

Figure 5 schematically illustrates a method of locating a radio-coverage cell having an unknown location using the known locations of adjacent cells;

Figure 6 is a schematic flow diagram of a radio-coverage cell locating method according to the first embodiment of the invention;

Figure 7 schematically illustrates a telecommunications system in which a location-based method of locating radio-coverage cells having an unknown location is used;

Figure 8 schematically illustrates the location-based method of locating radio-coverage cells used in the telecommunications system of Figure 7;

Figure 9 schematically illustrates the hierarchical radio-coverage structure of radio-coverage cells, location areas and visitor location registers;

Figure 10 is a table which illustrates an example count of VLRs, LACs and Cell Ids for multiple radio networks;

Figure 11 schematically illustrates a method of determining market share for mobile nodes transiting via train between two locations in accordance with an embodiment of the invention;

Figure 12 schematically illustrates an example train route to which the market share determination method of Figure 11 can be applied;

Figure 13 is a schematic flow diagram of a market share determination method for in-transit mobile nodes;

Figure 14 schematically illustrates a correspondence between a train time schedule and the number of users using VLRs associated with the train market segment;

Figure 15 schematically illustrates a distribution of times for users to transit between VLR IN and VLR OUT;

Figure 16 is a table which illustrates an example market share comparison for three mobile operators which operator in the determined train market segment;

Figure 17 schematically illustrates a loss-cell detection method in accordance with an embodiment of the invention; and

Figure 18 schematically illustrates a method of determining market share for mobile nodes entering an airport via an aircraft.

## Description of the Example Embodiments

Example embodiments of the present invention will now be described with reference to the example of a Global System for Mobile communication (GSM), although it will be appreciated that the embodiments of the present invention find application with other mobile telecommunications networks and standards.

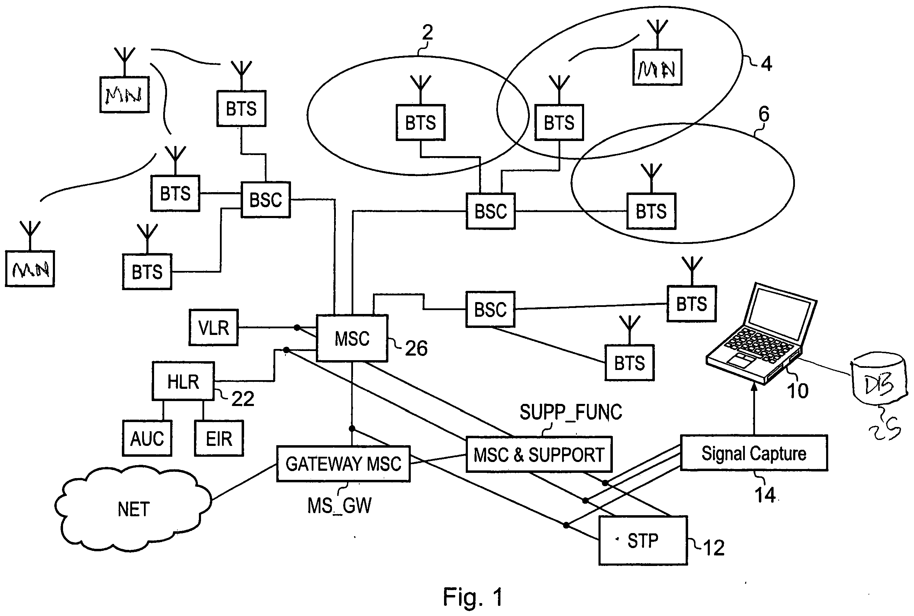

Figure 1 provides an example schematic block diagram of a mobile radio network according to the Global System for Mobile communication (GSM) standard. In Figure 1 a mobile switching centre (MSC) is connected to a plurality of base station controllers (BSC). Each of the base station controllers are connected to a plurality of base transceiver stations (BTS). The base transceiver stations and the base station controllers to which they are connected form base station sub-systems. Data is communicated via an air interface in accordance with the GSM standard between mobile nodes MN and one of the base transceiver stations with which the mobile node MN is currently affiliated via radio signals. While a mobile node MN is within a coverage area 2, 4, 6 provided by a base transceiver station, radio communications are available through that base transceiver station for transmitting and receiving data via the air interface.

Also forming part of the GSM network shown in Figure 1 is a visitor location register (VLR) which maintains a current location of each mobile subscriber which has roamed to the mobile network as a visited network. The VLR provides an indication of which of the base stations or group of base stations a mobile node MN is currently affiliated with. The GSM network also includes a home location register (HLR) which stores information specific to each subscriber to the mobile network which forms the home network for that subscriber. For example the HLR will store an indication of a visited mobile network to which a mobile subscriber has roamed, including an indication of the VLR of the visited network. The HLR also has access to an equipment identity register (EIR) to provide a facility through which a network operator may track stolen or malfunctioning terminals. The HLR also includes an authentication centre (AUC) which is used to store information associated with security features provided by the network.

The mobile switching centre is connected to a gateway MSC (MSC_GW) which provides a facility for connecting the mobile switching centre to other telecommunications networks which may include a public switched telephone network. An MSC support function (SUPP_FUNC) is also connected to the gateway MSC. More details on the GSM network may be found in a publication entitled "GSM, CDMA1 and 3G systems" by R. Steele ET AL published by John Wiley & Sons ISBN 0471491853.

Although Figure 1 provides an example of a second generation GSM network, it will be appreciated that embodiments of the present invention find application with other types of mobile networks such as for example 2.5G and 3G operating in accordance with the Universal Mobile Telecommunications System (UMTS).

Additionally, embodiments of the present invention may also find application with networks using other radio access technologies, such as a Wireless Local Area Network (WLAN). With WLAN for example, the SS7 signalling used in respect of the GSM network to determine Cell ID is replaced with Radius signalling, and the TAP file becomes a Radius CDR.

A mobile node which has roamed to a network other than its home network may select a visited mobile network either automatically or manually. In manual mode the user is presented with a list of available networks and invited to choose a preferred network. In an automatic mode, the user equipment may use a set of rules to find an appropriate network to visit. These rules may be included in the Subscriber Identity Module (SIM) card of the user equipment and may be used to ensure that a roaming subscriber visits a network preferred by the operator of the subscriber's home network in preference to a non-preferred network.

In Figure 1 a Signalling Transfer Point (STP) 12 provides a concentration point for signalling communications between the mobile radio network and other networks. Attached to the STP 12 is a signalling capture device 14, which detects signalling data communicated to and from the STP 12. The signalling data may be SS7 signalling data and includes signalling messages communicated for example, to and from the MSC, the VLR, and the HLR of the mobile network. As will be explained shortly the signalling data captured by the signalling capture device 14 is used to detect calls made on a visited mobile network. The detection of the call may be made by identifying an event where a mobile subscriber initiates a mobile originated call or receives a mobile terminating call via the visited mobile network. For instance, a mobile originated call will trigger the communication of service signalling data associated with a CAMEL signalling communication such as a CAMEL Application Part (CAP) Initial Detection Point (IDP). The CAP IDP identifies the mobile node from the International Mobile Subscriber Identifier (IMSI), a cell (Cell ID) of the visited network from which communication was made and the VLR of the visited mobile network.

The CAP IDP message can therefore be intercepted by the signal capture device 14 and passed to a data processor 10, thereby providing the data processor 10 with a Cell ID indicating a radio-coverage cell within the visited network at which the mobile node is located and via which the mobile node is communicating. The data processor 10 is also arranged to access a database (DB) 25 which stores the geographical location of a plurality of radio-coverage cells within one or more mobile access networks. The geographical locations are stored in the database in association with the Cell ID of the radio-coverage cells to which the geographical locations correspond. The radio-coverage cells within the database 25 may be radio-coverage cells of a mobile network which is affiliated in some way with the home network, such that the home network is permitted to know the locations of the radio-coverage cells. Alternatively, or even additionally, the database may include radio-coverage cells from a non-affiliated network which have been identified and located by this or another method.

The data processor 10 is able to query the database 25 for a geographical location associated with a particular Cell ID. If the data processor 10 detects signalling relating to two calls made to or from the same mobile terminal on different radio-coverage cells within a predetermined maximum time separation from each other, the data processor 10 is able to make an assumption that the different radio-coverage cells are "adjacent" cells. This is because it is considered unlikely that the mobile terminal could have moved a substantial distance within that predetermined maximum time separation. For example, the maximum time separation could be selected as 15 minutes. Using this assumption, and by referring to the database 25, if the radio-coverage cell used to make one of the calls is at a known geographical location, by virtue of it being present within the database 25, then the radio-coverage cell used to make the other call can be attributed an estimated geographical location which is based on the known geographical location of the radio-coverage cell at the known location.

The longer a time window within which calls are counted, the greater the number of calls which will be included in the time window and therefore the greater the statistical sample which can be used to identify the geographical locations of cells having an unknown location. However, given that the speed of the mobile is unknown, the greater the time window within which results are counted, the less accurate the estimate of the geographical location of the cell will be. Accordingly, the time window should be selected to balance these competing factors.

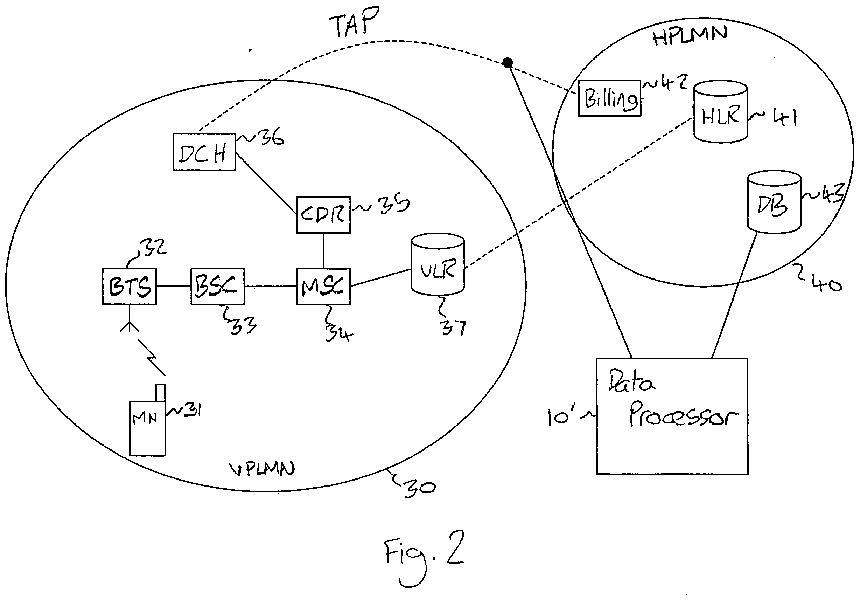

In Figure 1, the Cell ID is identified from SS7 signalling data exchanged between the MSC, VLR and HLR. Figure 2 schematically illustrates an alternative network arrangement in which the Cell ID is identified from a Transaction Application Part (TAP) file which is generated by a visited network and sent to the home network of a visiting mobile node in order to effect billing in respect of a communications session. In Figure, 2, a mobile node (MN) 31 is currently visiting and affiliated to a Visited Public Land Mobile Network (VPLMN) 30. For example, the mobile node 31 may have roamed to the VPLMN 30 or handed over to the VLPMN 30. The mobile node 31 is in radio communication with the VPLMN 30 via a Base Transceiver Station (BTS) 32. Communications between the mobile node 31 and the VPLMN 30 are carried out under the control of a Base Station Controller (BSC) 33. The present invention is not limited to any particular type of communications session or radio access technology, and could function in respect of, for instance, a voice call, instant or video messaging, or data streaming. For the sake of clarity, the following example is based upon a voice call made to or from the mobile node 31. A Mobile Switching Centre (MSC) 34 is provided and operates to exchange information with location databases such as the Visitor Location Register (VLR) 37 of the VPLMN 30. The VLR 37 is operable to communicate subscriber data to and from a Home Location Register (HLR) 41 of the mobile node 31 in a Home Public Land Mobile Network (HPLMN) 40 of the mobile subscriber 31.

The MSC 34 communicates with a Call Detail Record (CDR) Unit 35 which generates a Call Detail Record which includes billing information. In particular, the CDR may contain details such as the called and calling parties, call length, time of day and an indication of the identity (Cell ID) of a radio-coverage cell with which the mobile node 31 was affiliated when the call was made. The radio-coverage cell may be the geographical area covered by the BTS 32. The Call Detail Record is then passed to an external party, known as a Data Clearing House (DCH) 36 which generates a Transferred Account Procedure (TAP) file which can be communicated to a billing system 42 of the HPLMN 40 of the mobile node 31.

A data processor 10' is provided and is arranged to extract Cell ID information and call time information from the TAP file sent from the Data Clearing House 36 to the billing system 42. For instance, a probe could be provided within the HPLMN 40 to intercept the TAP file before it is received by the billing system 42, or alternatively the billing system 42 could be operable on request from the data processor 10' to communicate the TAP file, or at least the relevant data from the TAP file, to the data processor 10'. The data processor 10' is also arranged to access a database (DB) 43, which may be provided within the HPLMN 40, or which may be stored within the data processor 10' itself, and which stores the geographical location of radio-coverage cells within one or more mobile access networks. The data processor 10' is operable to query the database 43 for a geographical location associated with a particular Cell ID. If the data processor 10' identifies data relating to two or more calls made to or from the same mobile terminal on different radio-coverage cells within a predetermined maximum time separation from each other, the data processor 10' will determine the radio-coverage cells to be "adjacent" cells. If one of these radio-coverage cells is at a known location and the other is at an unknown location, the geographical location of the radio-coverage cell for which the location is unknown can be estimated from the geographical location of the radio-coverage cell for which the location is known.

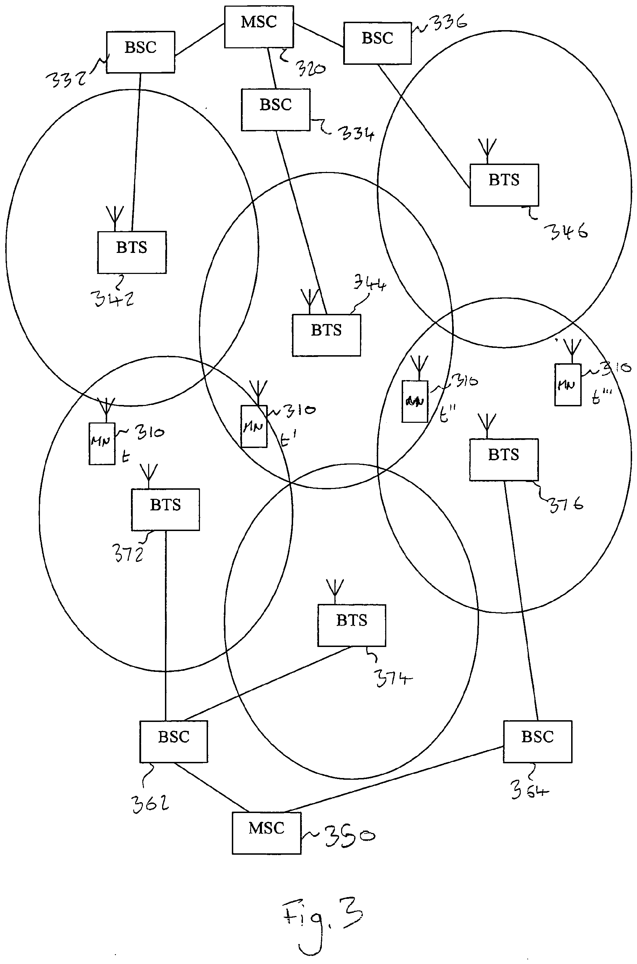

Figure 3 schematically illustrates how a mobile node may change affiliation between multiple visited networks as it moves throughout a geographical area. A mobile node may change affiliation between radio-coverage cells within the same radio network, or between radio-coverage cells of different radio networks. A change of affiliation may result when the radio-signal quality provided by a current radio-coverage cell reduces compared with the radio-signal quality provided by an adjacent radio-coverage cell. In the example of Figure 3, radio-coverage cells associated with two different radio networks are shown. In particular, a first radio network is represented by an MSC 320, which controls a BSC 332, a BSC 334 and BSC 336. The BSC 332 controls a BTS 342, the BSC 334 controls a BTS 344 and the BSC 336 controls a BTS 346. A second radio network is represented by an MSC 350, which controls a BSC 362 and a BSC 364. The BSC 362 controls a BTS 372 and a BTS 374. The BSC 364 controls a BTS 376. Each BTS within the first and second radio networks provides a corresponding radio-coverage area which is represented in Figure 3 by an ellipse surrounding the respective BTS.

The movement of a mobile node 310 across several radio-coverage cells is illustrated in Figure 3, with the position of the mobile node 310 at four different times, t, t', t" and t'". At the times t, the mobile node 310 is present within a radio-coverage area provided by the BTS 372 of the second visited network, and is therefore affiliated with the second visited network. A communications session provided to the mobile node at the time t will therefore use the second visited network. At the time t' the mobile node 310 is within a radio-coverage area of both the BTS 372 of the second visited network and the BTS 344 of the first visited network. If it is determined that the radio-signal quality provided by the BTS 344 is better than the radio-signal quality provided by the BTS 372, a procedure for changing affiliation from the second visited network to the first visited network will commence. The procedure for changing affiliation between radio coverage cells of different visited radio networks involves an exchange of signalling between the mobile node 310 and the first and/or second visited network, and also involves communicating a location update message to the home location register within the home network of the mobile node, such that the home network is able to route incoming calls to the correct visited mobile radio network.

At the time t", the mobile node is within the radio-coverage area of both the BTS 344 of the first visited network and the BTS 376 of the second visited network, and may therefore change affiliation from the first to the second visited network as described above. Then, as the mobile node moves through the radio-coverage area of the BTS 376 of the second visited network until a time t'", it will remain affiliated with the BTS 376.

It will therefore be appreciated that a mobile node may be required to switch between different radio-coverage cells on different mobile radio networks in order to maintain a radio communications link. In the case of a mobile node which is within its home network, the mobile node will usually remain attached to the home network in preference to any other network. In the case of a mobile node which is roaming outside of its home network into a visited network, the mobile node may attach to the visited network which will provide the best radio signal quality, but may also take other factors into account, such as a list of preferred networks provided within a Subscriber Identity Module (SIM) of the mobile node. The operator of each of the visited mobile radio networks seeks to increase the amount of time that an inbound roaming mobile node spends on their own network, because revenue is generated when a mobile node makes a call on a visited mobile radio network.

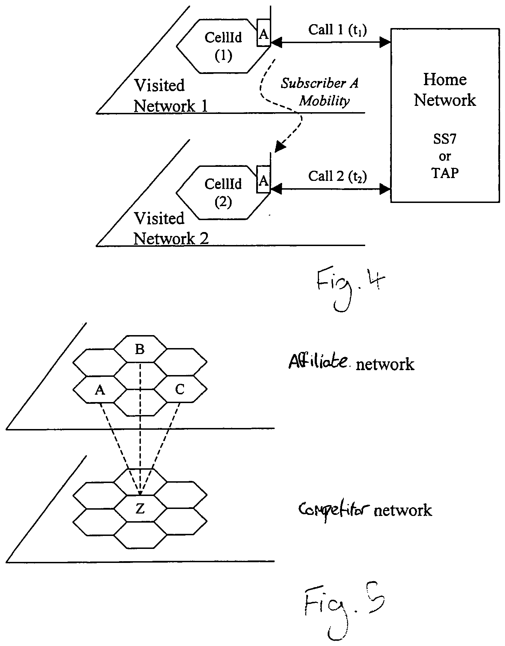

Figure 4 is a schematic illustration of a method of estimating a geographical location of a radio-coverage cell having an unknown location from a call made on an adjacent radio-coverage cell. In Figure 4, a first call (Call 1) is made on a radio-coverage cell having a Cell ID "1" on a first visited network (Visited Network 1) either to or from a mobile node A at a time $t_1$. As a result of this call, a TAP file and SS7 signalling will be transmitted to the home network of the mobile node A. One or both of the TAP file and SS7 signalling can be used to determine the time $t_1$ of Call 1 and the Cell ID of the radio-coverage cell to which mobile node A was affiliated at the time of Call 1. Following Call 1, mobile node A moves into the coverage area of a radio-coverage cell having a Cell ID "2" on a second visited network (Visited Network 2), and a second call (Call 2) is then made, at a time $t_2$, to or from the mobile node A. As with Call 1, a TAP file and SS7 signalling are transmitted to the home network of the mobile node A, and can be used to determine the time $t_2$ of Call 2 and the Cell ID of the radio-coverage cell to which mobile node A was affiliated at the time of Call 2. In this case, $t_2 - t_1 < T_{max}$, $T_{max}$ being the maximum time separation, and so the radio-coverage cell having the Cell ID "1" and the radio-coverage cell having the Cell ID "2" are considered to be adjacent cells.

If the geographical location of one these adjacent cells is known, but the geographical location of the other is not known, then an assumption can be made that the geographical location of the cell having an unknown location is close to the geographical location of the cell having a known location as a result of the time $t_2 - t_1$ between Call 1 and Call 2 being less than $T_{max}$. As will be exemplified by Figure 5, a correlation between a cell having an unknown location and multiple adjacent known cells can be used to determine a more accurate location of the radio-coverage cell having an unknown location.

For instance, referring to Figure 5, a cell (Cell Z) on a competitor network for which cell locations are not known has been determined as having three adjacent cells (Cell A, Cell B and Cell C)- on an affiliate network for which cell locations are known. These adjacent cells could have been determined from calls made in respect of three different mobile nodes, for instance, two calls made by a first mobile node on cells Z and A respectively within the predetermined maximum time separation, two calls made by a second mobile node on cells Z and B respectively within the predetermined maximum time separation and two calls made by a third mobile node on cells Z and C respectively within the predetermined maximum time separation. In this case, referring to Figure 2, the data processor 10' is able to query the database 43 in the HPLMN 40 to determine the geographical location of each of cells A, B and C. The location of the cell (Cell Z) having an unknown location can then be inferred as the mean average of the locations of Cell A, Cell B and Cell C, in accordance with the following equation:

$$CellZ\ (X,Y) = Mean\ (CellA\ (X,Y), CellB\ (X,Y), CellC\ (X,Y))$$

Where CellZ(X,Y) is the inferred geographical location of Cell Z, CellA(X,Y) is the known geographical location of Cell A, CellB(X,Y) is the known geographical location of Cell B and CellC(X,Y) is the known geographical location of Cell C.

In the example of Figure 5, the cell (Cell Z) having an unknown location is on a competitor network, whereas the known cells (Cells A, B and C) are on an affiliate network. This need not necessarily be the case, because once cells on a competitor network have been located by the data processor, their location becomes known and they could be used to locate further cells in accordance with the above technique.

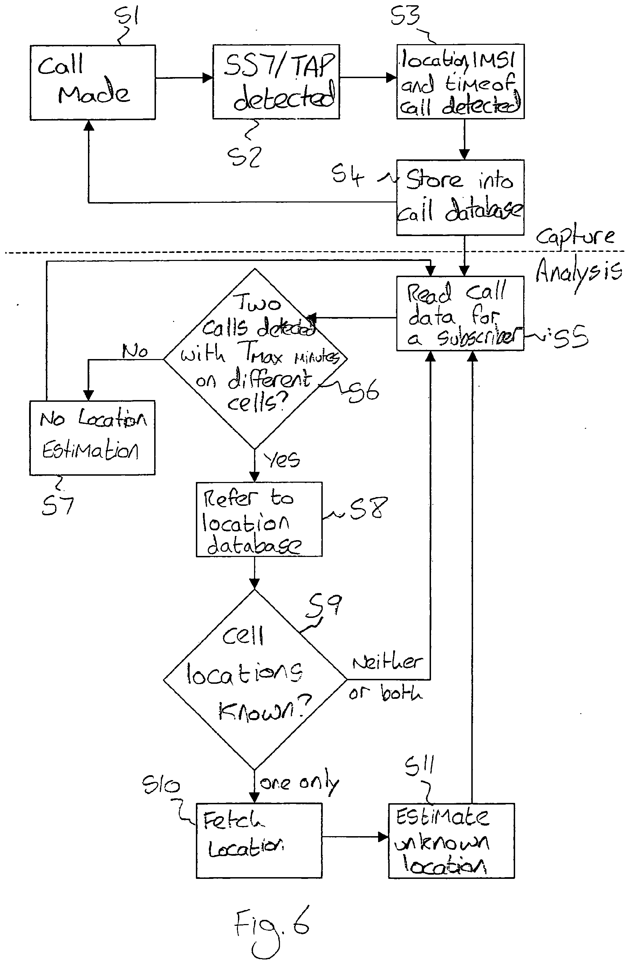

Figure 6 is a schematic flow diagram summarising the above process. The process is illustrated in Figure 6 as comprising two stages: a data capture stage (all steps above the dashed line) and a data analysis stage (all steps below the dashed line). In the data capture stage, at a step S1, a call is made to or from a mobile node via a particular radio-coverage cell. As a result of the call, signalling messages are generated at a step S2 as part of the operation of the mobile radio network, these signalling messages including an indication of the Cell ID from which the communications session took place. The Cell ID of the cell of an unknown location is communicated to the home network of the mobile node in the form of SS7 signalling as described above with reference to Figure 1, and a TAP file used to communicate billing information to the home network is also generated as described above with reference to Figure 2. At a step S3, the SS7 signalling or TAP file is intercepted by a signal capture device and then the location of the radio-coverage cell to which the mobile node is affiliated (network identifier and Cell ID), the identity (e.g. IMSI) of the mobile node and the time of the call are all detected. Then, at a step S4, the network identifier, Cell ID, IMSI and time of call are stored into a call database. Steps S1 to S3 will then be repeated for each call made for a given period of time, for instance an hour, day, week or month. In this way, a database is populated with a list of calls made on various radio coverage cells at different times and by different mobile nodes.

At a step S5, when the data capture stage has been completed, the data analysis stage commences. The data analysis stage can commence at any time after all data has been collected in the data capture stage. In particular, at the step S5, call data is read from the call database in respect of a particular mobile node, as identified by the IMSI stored in the call database. At a step S6, it is determined whether any two calls made by the mobile node were made using different radio-coverage cells, and if so whether the calls were made within a maximum call separation $T_{max}$ of each other. Only if both of these criteria are met for two calls made by a mobile node can those calls be used as part of the cell locating process, in which case processing will move on to a step S8. If no two calls made by the mobile node satisfy the two criteria, then, at a step S7 it is determined that the calls made by that mobile node cannot be used for the purpose of locating radio-coverage cells, and processing returns to the step S5, where data is read in respect of another mobile node. On the other hand, if two calls are found at the step S6 which satisfy the criteria as to being on different cells and the criteria as to being made within the predetermined time $T_{max}$ from each other, then at a step S8, reference is made to a location database to determine, at a step S9, whether one or both of the cell locations are known. If neither cell location is known, or if both cells locations are known, then the two calls cannot be used to locate radio-coverage cells and processing returns to the step S5. If the location of one of the cells upon which a call was made is known, but the location of the other cell is unknown, then at a step S10 the known location will be fetched from the location database, and at a step S11 the fetched location will be used to estimate the location of the cell having an unknown location. Following this, processing returns to the step S5, where further data can be read from the call database.

As set out above, this process can be repeated in respect of the same cell, with each repeat enabling the cell to be associated with another geographical location. The multiple geographical locations associated with a single cell of unknown location can then be averaged, thereby iteratively improving the accuracy of the estimated location of the unknown cell.

## Cell Location Precision

The likely precision with which the above location determination model operates can be assessed by using the model to locate known cells. When the estimated location has been generated for the known cells, it is possible to compare the estimated locations with the known locations of the cells to measure any differences between the estimated and known locations. These differences can be converted into statistical parameters which can be used to associate a degree of confidence with the estimated locations for cells having an unknown location within a given network environment.

## Location Based Services

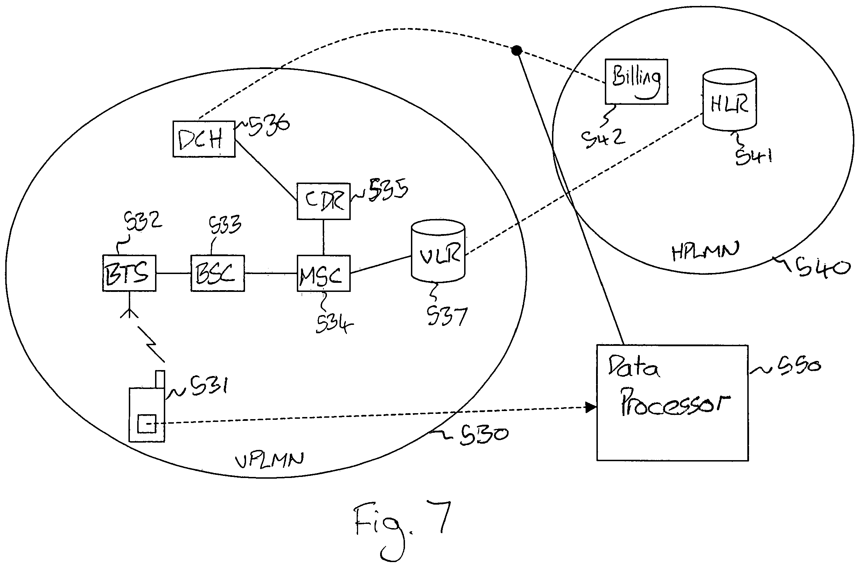

An alternative method of locating radio-coverage cells which have an unknown location is illustrated in Figure 7. In Figure 7, the operation of the BTS 532, the BSC 533, the MSC 534, the CDR 535, the DCH 536 and the VLR 537 of a VPLMN 530, the HLR 541 of a HPLMN 540 and the Billing System 542 operate in the same way as the BTS 32, the BSC 33, the MSC 34, the CDR 35, the DCH 36 and the VLR 37 of the VPLMN 30, the HLR 41 of the VPLMN 40 and the Billing System 42 as described in relation to Figure 2. However, in this embodiment a geographical location associated with a mobile node 531 when affiliated to a particular radio-coverage cell is determined by a positioning service, for instance the Global Positioning Service (GPS), provided in respect of the mobile node 531. The location data identifying the position of the mobile node 531 can be communicated to the data processor 550 by any available method, for instance by sending a signalling message across the VPLMN 530 and the HPLMN 540. In this case, there is no need to correlate a cell having an unknown location with cells having a known location to infer a geographical location of the cell having an unknown location, because the geographical location of the cell having an unknown location is measured directly. This enables accurate locating of cells on a competitor network, by associated Cell IDs at measured locations. This technique can be used to confirm or assess the accuracy of the estimate of the location provided by the adjacent cell method discussed above, or to obtain some initial cell-location readings which can then be used as cells having a known location in the adjacent cell method.

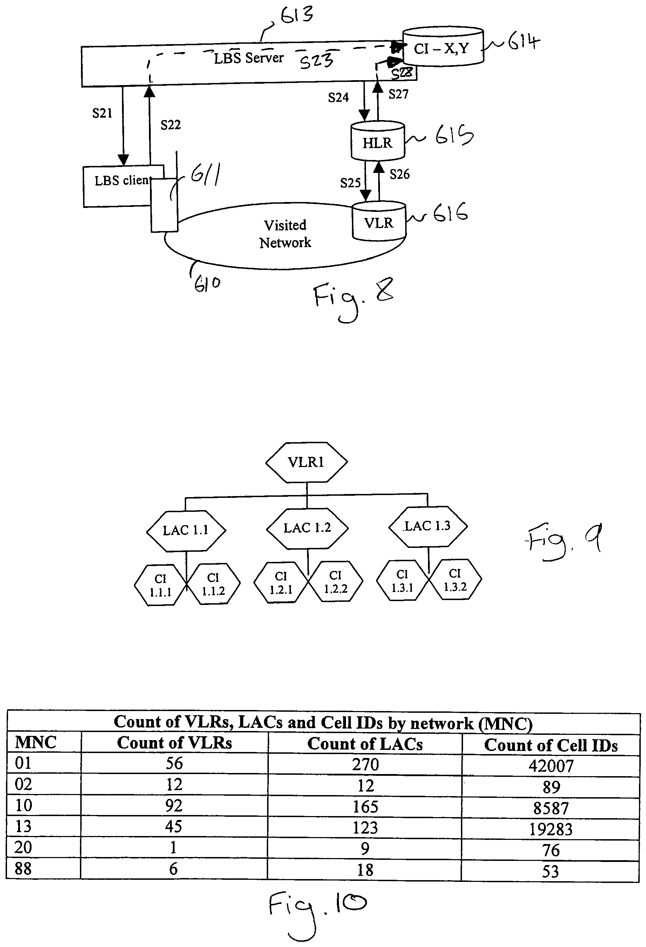

An example of a location-based application architecture for providing the above positioning information and Cell ID is illustrated in Figure 8. In Figure 8, a mobile node 611 is currently affiliated to a visited network 610. The mobile node 611 includes an embedded location based services application which enables the mobile node 611 to act as a location based services client. A location based services (LBS) server 613 is operable to issue the mobile node 611 with a location request instruction at a step S21, and the mobile node 611 is responsive to the location request instruction to provide the geographical location of the mobile node 611 to the LBS server 613 at a step S22. The geographical location (X, Y) is then communicated to a cell database 614 at a step S23.

At around the same time as steps S21, S22 and S23, the LBS server 613 issues a MAP (Mobile Application Part) ATI (Any Time Interrogation) message to the HLR 615 of the mobile node at a step S24. Then, at a step S25, the HLR 615 issues a MAP PSI (Provide Subscriber Information) message to the VLR 616 of the visited network. The MAP PSI message is a request for the VLR to provide certain subscriber information, including an indication of the radio-coverage cell to which the mobile node is currently affiliated. In response to the MAP PSI message, the VLR 616 issues to the HLR 615, at a step S26, a MAP PSI response message which includes an indication of the identity of the radio coverage cell, location area and VLR to which the mobile node 611 is currently affiliated. In response to the MAP PSI response message, the HLR 615 issues, at a step S27, a MAP ATI response message to the LBS server 613 including the indication of the identity of the radio-coverage cell, location area and VLR to which the mobile node 611 is currently affiliated. This cell identity data is then communicated to the database 614 at a step S28, where it is correlated with the location data, thereby forming an association in the database 614 between cell identity and geographical location.

While this technique could be used as an alternative to the adjacent cell method, the mobile node must include a location-based application, whereas the adjacent cell method can use all roaming traffic. The location-based method can be used where there is no known network to provide the known adjacent cells, in which case the location-based method can discover the location of a few cells, and then further cells can be located using the adjacent cell method.

## Radio Coverage Zapping

A radio-coverage map can be generated from the detected and located radio-coverage cells within a given geographical area. In addition to a general measure of radio-coverage, it is also possible to build a coverage map according to technology, type of service, and also by associated quality of service. For example, the radio-coverage of an access network could be determined in respect of a particular radio access technology (e.g. 2G or 3G), or in respect of a particular packet technology (e.g. GPRS, EDGE, 3G, HSDPA or HSUPA).

### Radio Access Technology

It is possible to gain a view on the deployment progress of 3G technology on a competitor network. This can be achieved by determining not only the location of cells within the competitor network, but also whether specific 3G services (e.g. video-telephony) have been provided to a mobile node with that cell. This information could be retrieved from CAMEL (Customised Applications for Mobile network Enhanced Logic) signalling back to the home network, or from the TAP file, which includes billing information relating to the 3G only services.

### Packet Technology

Based on the packet CDR (TAP), it is possible to gain an idea of the bandwidth allocated per cell, by computing average and maximum throughput used by roamers on the visited network. This bandwidth information could provide a good indication of the packet technology deployed by competitor networks. The average and maximum throughput could be rated taking into consideration knowledge of the terminal equipment used, because the terminal identifier IMEI (International Mobile Equipment Identity) is also present in the TAP file. For instance, some terminal equipment may have limited bandwidth capabilities and may therefore contribute to the bandwidth information (for instance a GPRS-based terminal may not be able to deal with 3G type communications).

### Market Share per Segment

Based on cellular information regarding different networks operating within the same country, it is possible to determine indicators such as the market share within a predetermined location or in respect of a particular transport route. For instance, the market share could be determined for a segment, which could be one of:

- Region

- Train

- Road

- Boat

- Airport

### Region Segment

Radio coverage within a particular country or area can be described hierarchically in terms of cell, location area and VLR. An example of this hierarchy is schematically illustrated in Figure 9. Referring to Figure 9, each radio-coverage cell (e.g. CI 1.1.1, CI 1.1.2) is associated with a particular location area (e.g. LAC 1.1) described by a location area code (LAC). There may be many radio-coverage cells associated with a single location area. Each location area is associated with a particular VLR (in Figure-9 only a single VLR is illustrated, this being VLR 1). There may be many location areas associated with a single VLR. Accordingly, considering radio-coverage on a VLR level will provide a coarse picture of radio-coverage within a particular country, whereas considering radio-coverage on a cell level will provide a fine picture of radio-coverage and considering radio-coverage on a location area level will provide a intermediate degree of granularity. In terms of assessing market share, using the VLR level could be useful when considering large regions of a country, whereas the cell level and location area level could be useful when considering smaller regions of a country. The location area is likely to provide a degree of granularity which is well matched to the topology of a particular country.

This can be better understood from Figure 10, which is a table illustrating an example count of VLRs, LACs and Cell IDs for each network, as identified by a Mobile Network Code (MNC). It can be seen from Figure 10 that each network includes more Cell Ids than LACs, and more LACs than VLRs. It will be appreciated then, that a Cell ID will relate to a smaller geographical area than a LAC or VLR.

The location of some or all of the radio-coverage cells within a network can be determined by one of the techniques described above. A geographical location for a particular location area can be taken to be the mean of the location of all known cells associated with that LAC, and the "location" of a VLR can be taken to be either the mean of the location of all known cells associated with that VLR or the mean of all location areas associated with the VLR. In this way, any cell, location area or VLR can be identified as belonging to a particular geographical region within a country. It is then possible to determine the respective market shares for multiple networks in particular regions of a country.

**Train Segment**

The start location and the end location of a train trip, and the approximate time taken for the train to move from the start location and the end location can be easily determined, for instance from train timetables. It is possible to identify one or more VLRs for each mobile operator which cover the start location, and one or more VLRs from each mobile operator which cover the end location. It is therefore possible to identify mobile nodes which have taken a particular train trip by specifying the following conditions:

1) That the mobile node enters one of a first list of VLRs (VLR IN) corresponding to the start location;
2) That the mobile node exits one of a second list of VLRs (VLR OUT) corresponding to the end location; and
3) That the time difference between VLR IN and VLR OUT falls within a range of prescribed values.

The home network of a mobile node will be aware of any change in the VLR to which the mobile node is affiliated. This is necessary because the home network needs to know which VLR the mobile node is affiliated to in order to route any incoming calls or messages to the correct VLR for relay to the mobile node. Accordingly, whenever the mobile node switches affiliation to a new VLR, an indication of the new VLR is communicated to the HLR in the home network as part of the location update procedure. It will be appreciated that the times at which these changes in VLR occur can be tracked by the home network. In this way, the home network is able to collect the information required to identify mobile nodes which are affiliated first with one of the first list of VLRs (VLR IN) and then with one of the second list of VLRs (VLR OUT), and to identify whether the time difference between VLR IN and VLR OUT for these mobile nodes fall within the range of prescribed values. If so, it is assumed that the mobile node was one of the mobile nodes on the train because the time difference between VLR IN and VLR OUT matches an expected time difference for the train route.

At a simplistic level, the criteria could be based only on whether the time difference between VLR IN and VLR OUT is less than a first predetermined duration. This would exclude less expeditious modes of transport than the mode of transport for which the market share is being defined. However, the time difference between VLR IN and VLR OUT may also need to be greater than a second predetermined duration, thereby excluding more expeditious modes of transport as well.

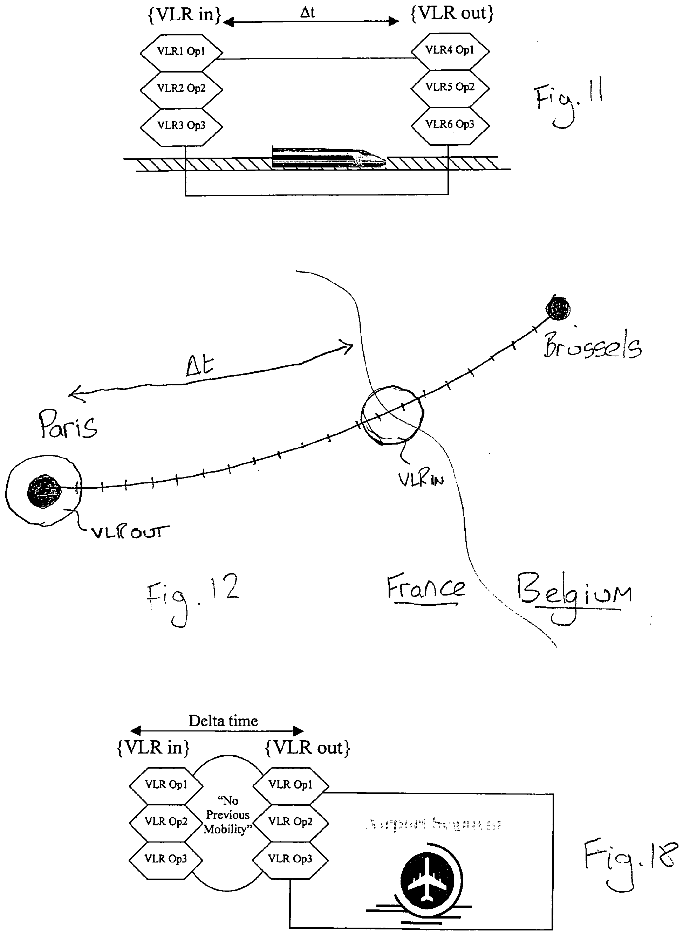

For example, referring to Figure 11, VLR IN includes VLRs of three different operators, in particular VLR_IN Op1, VLR_IN Op2 and VLR_IN Op3. VLR OUT also includes VLRs of three different operators VLR_OUT Op1, VLR_OUT Op2 and VLR_OUT Op3. The scheduled duration of the relevant journey might be 45 minutes, and a range of prescribed values of 40 to 50 minutes might therefore be specified as a requirement for a transition from VLR IN to VLR OUT to be considered to belong to the train segment. In this way, it is possible to work out a market share with respect to all operators.

An example of a train route which can be assessed in this way is schematically illustrated in Figure 12, which shows a train route between Brussels, in Belgium, and Paris, in France. The train route intercepts the France-Belgian border, at a geographical location covered by a list of VLRs VLR IN, the VLRs being provided by operators of French mobile networks. A train station in Paris is the destination of the train route, and a list of VLRs VLR OUT cover the geographical area of the train station in Paris. All mobile nodes which enter the French mobile networks at a VLR of VLR IN and subsequently become attached with a VLR of VLR OUT at around a time Δt are deemed to form part of the Brussels to France train segment.

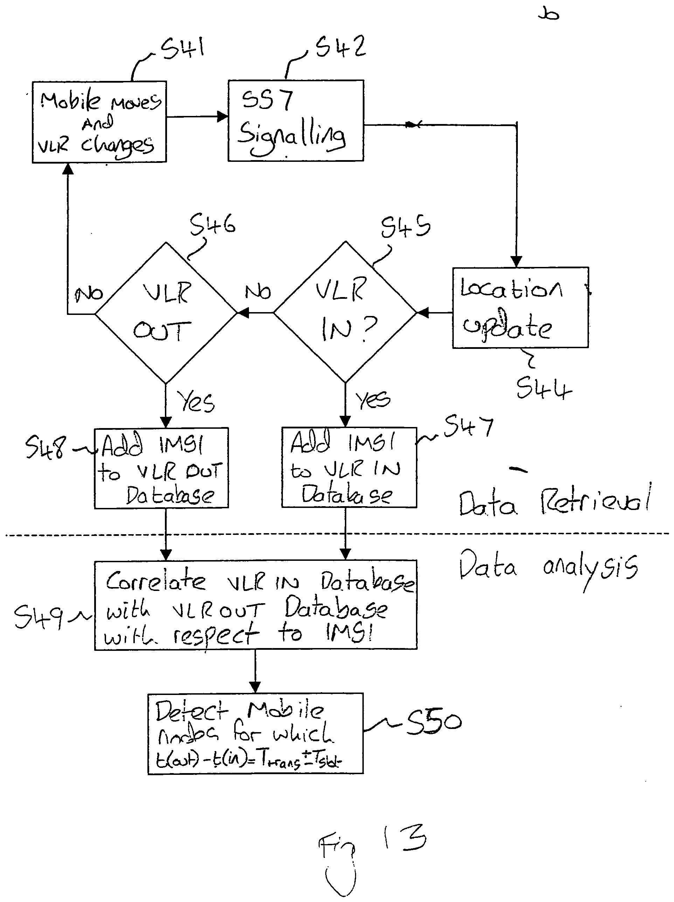

Figure 13 is a schematic flow diagram illustrating the process of detecting mobile nodes which form part of the train segment for a particular train line. The process is separated into two stages, these being a data retrieval stage, and a data analysis stage. In the data retrieval stage, at a step S41, a mobile node moves, and as a result of this movement the radio conditions experienced by the mobile node may change, resulting in a decision by the mobile node or the network for the mobile node to change affiliation to a different radio-coverage cell. The change of affiliation results in SS7 signalling being generated at a step S42, and in the present case, where the new radio-coverage cell is associated with a different VLR from the existing radio-coverage cell, a location update to be performed at a step S44 in which signalling messages are communicated to the home network to which the mobile node is subscribed to update the home location register of the mobile node with the current VLR of the mobile node.

The signalling messages communicated to the HLR are detected by a signal capture device such as the signal capture device 14 illustrated in Figure 1. At a step S45 it is determined whether an area update message involves a change of affiliation to a VLR which is identified as a VLR IN. If the area update message indicates that a mobile node has changed affiliation to a VLR which is identified as a VLR IN, then at a step S47 the mobile IMSI (International Mobile Subscriber Identity) and a time of the area update are stored to a VLR_IN database. If the area update message does not indicate that the mobile node has changed affiliation to a VLR which is identified as a VLR IN, then at a step S46 it is determined whether the area update message involves a change of affiliation to a VLR which is identified as a VLR OUT. If the area update message indicates that a mobile node has changed affiliation to a VLR which is identified as a VLR OUT, then at a step S48 the mobile IMSI and a time of the area update are stored to a VLR_OUT database. When the VLR_IN database and the VLR_OUT database have been compiled, then the data retrieval stage is complete, and the data analysis stage can commence. In the data analysis stage, at a step S49, the VLR IN database and the VLR OUT database are correlated with respect to IMSI, thereby identifying all mobile nodes which have become affiliated to both VLR_IN and VLR_OUT. At a step S50, mobile nodes for which the time they became affiliated to VLR OUT $t_{out}$ subtracted by the time they became affiliated to VLR IN $t_{in}$ is equal to the transit time $T_{trans}$ of the train journey plus or minus a time slot margin $T_{slot}$ are detected and are determined as constituting part of the train segment.

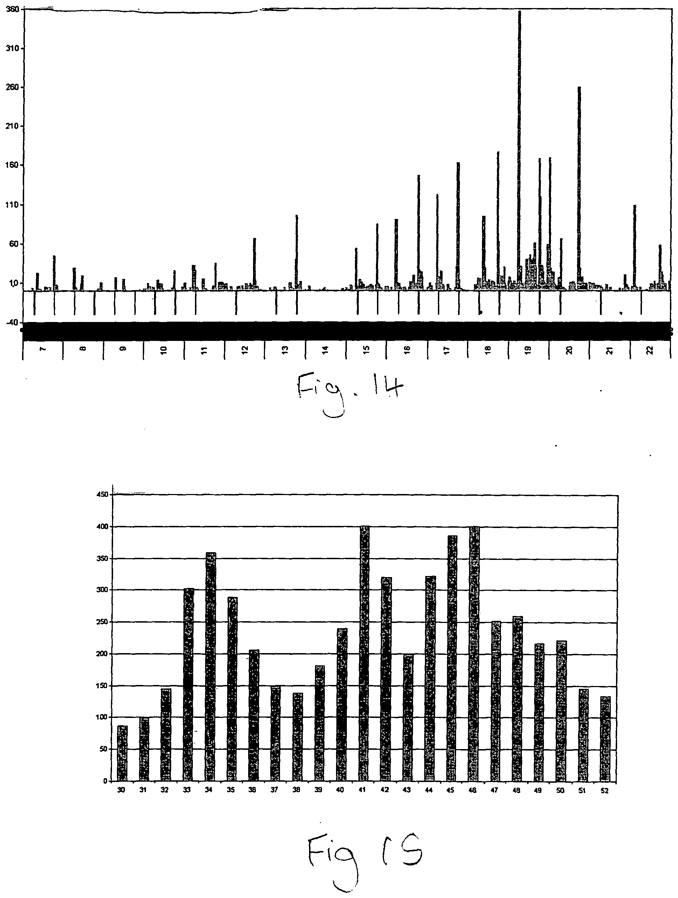

Figure 14 schematically illustrates, in respect of the train route illustrated in Figure 12, a correspondence between the time which mobile nodes performed a location update in respect of a VLR on the list VLR IN and the time when a train was scheduled to cross the French-Belgian border. The dark vertical lines underneath the x-axis of the graph of Figure 15 represent the time when trains crossed the France-Belgian border, and the vertical lines above the x-axis represent the number of mobile nodes which performed a location update in respect of a VLR on the list VLR IN as a function of time. It can be seen that there is a good correlation between the location update signalling and the train times.

Figure 15 schematically illustrates, again in respect of the train route illustrated in Figure 12, the distribution of time (in the range from 30 minutes and 52 minutes) for mobile nodes which became attached first to VLR IN, and then to VLR OUT. The mean value is between 35 and 45 minutes, which is in line with the time of a train journey from the France-Belgian border to Paris (below 50 minutes). The time variance will depend mainly on two factors, the first being the speed of the train, and the second being the fact that VLR IN and VLR OUT will not have the same topology for different operators. In particular, the VLRs of different operators within the VLR IN and VLR OUT list will not be perfectly coincident in terms of geographical area, and this will effect the time of a location update on the train route.

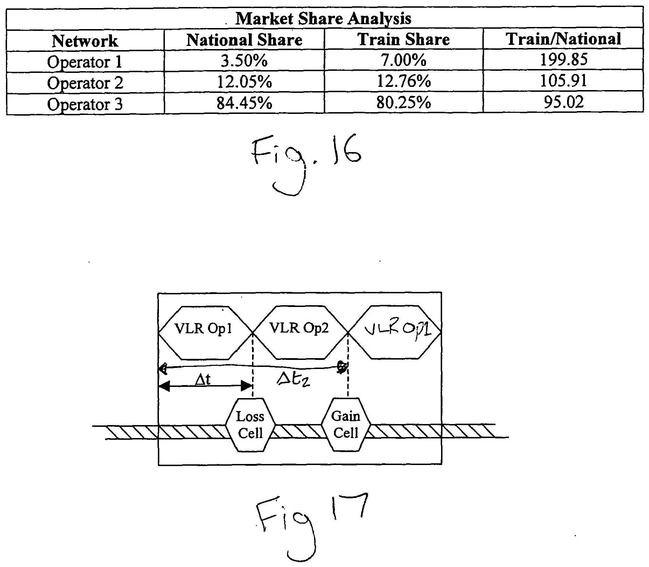

Once the train segment has been identified, it is possible to identify the market share for the train segment for each of operators 1 to 3. For instance, example market share values are illustrated in Figure 16, in which a national share, a train share and a train share / national share ratio are provided for each of operators 1 to 3. The national share is the share of the market across the whole country. The train share is the share of the market for a particular train route (for instance the train route from Brussels to Paris of Figure 12) and the train share / national share ratio indicates whether the train share for a particular operator is above the national average for that operator. In the case of Figure 16, it can be seen that operator 1 has a relatively small share of both the overall and train markets, but in relative terms is very strong in the train market compared with the national market as a whole. Both operators 2 and 3 have a train market share which is fairly close to the national market share of the operator.

Various market share indicators can be computed, including the market share based on mobility, using the MAP SS7 signalling, and the market share based on call control for various services such as mobile originating calls (MOC), mobile terminating calls (MTC), short messaging service (SMS), both mobile originating and terminating, and GPRS communications, in each case using SS7 signalling or TAP files.

The principles which apply to the train segment described above also apply to the road segment, where a car journey by motorway can be treated in the same way as a train journey with fixed start and end points and a prescribed minimum and maximum duration. Additionally, the same principles also apply to the boat segment, where VLR IN may correspond to one port and VLR OUT may correspond to another port, and where the approximate journey time between the two ports is known. VLR IN and VLR OUT may be in either the same or different countries.

**Loss Cell Detection**

For linear segments such as the train or road segment, it is possible to detect the cells where traffic is lost from one operator to another operator. This is schematically illustrated in Figure 17. In particular, based on the MAP SS7 signalling, it is possible to trace mobility events, such as MAP Location Update and to identify the VLRs covering the segment. When the relocation of a mobile node from a first operator (VLR Op1) to a second operator (VLR Op2) is detected, the point at which this occurs represents the "loss cell". Due to the linear nature of the train or road segment, it is possible to convert the time of the loss ($\Delta t$) into a position on the train line or the road, thereby providing a good estimate of the loss cell location. Equally, a gain cell can be detected where a mobile node relocates from the second operator (VLR Op2) to the first operator (VLR Op1), and the time of the gain ($\Delta t_2$) can be converted into a position on the train line or the road.

**Airport Segment**

Figure 18 schematically illustrates a way of defining a market share for an airport. In particular, an airport segment could be defined as all mobile nodes which have become affiliated with a VLR corresponding to the airport location, but which had no previous mobility detected by the home network with the neighbouring VLRs. This is consistent with the situation which occurs with passengers entering the airport from a plane, where the mobile node would have been switched off while transiting through the neighbouring VLRs. However, this measure would also cover users who move into the area of the VLR corresponding to the airport region from a distant VLR with their mobile phone switched off by a mode of transport other than an aircraft, and then switch their mobiles on again. In order to overcome this limitation, it may be necessary to take into consideration the previous VLR used by each mobile terminal, and the time delay between the time of location update to the previous VLR and the time of location update to the airport VLR.

In this way, it is also possible to distinguish between domestic flights (which will have the previous VLR in the same country as the airport VLR) and international flights (in which the previous VLR will be in a different country to the airport VLR).

### Additional Features

The cell identities and locations from competing networks could also be used to perform network activities such as traffic steering or network routing. For instance, traffic steering could be performed based on the cell ID of the visited networks, thereby improving border control. Routing decisions, controlled for example by CAMEL, could be carried out based on VLR position, the VLR position being determined by calculating the mean of the locations of radio-coverage cells corresponding to the VLR.

Based on the cellular information (Cell ID and LAC) for all operators in one country, it will be possible for an operator to deliver Location Based Services such as weather, traffic, and assistance to their subscribers which are roaming into unknown networks.

Various modifications of the embodiments herein before described may be made without departing from the scope of the present invention. For example, while embodiments of the invention have been described in relation to a GSM network, it will be appreciated that the invention may be equally applicable to other types of mobile telecommunications network. Also, while embodiments of the present invention attribute mobile nodes to a particular transport route in dependence on visitor location registers (VLR) with which the mobile node is, or has been, associated, the invention may also be provided in dependence on other network entities with which the mobile terminal is, or has been, associated. While the transport route has been described as one of a road, rail, sea or air route, other modes of transport can also be envisaged, such as tram or pedestrian walkway, to which embodiments of the present invention may be applicable. The signalling data used in the identification of the location of radio-coverage cells and in the identification of a particular transport route may be collected continuously from a mobile telecommunications network, or may be periodically provided by the mobile telecommunications network.

### Claims

1. Data processor (10; 10') operable
   to detect a communication to or from a mobile node (A) via a first radio-coverage cell (Cell Z) at a first time ($t_1$),
   to detect a communication to or from the mobile node (A) via a second radio-coverage cell (Cell A) at a second time ($t_2$),
   **characterized in that** said data processor (10 ; 10') is further operable
   to determine that the difference between the second time ($t_2$) and the first time ($t_1$) is less than a predetermined value ($T_{max}$), and if so
   to identify the location of the first radio-coverage cell (Cell Z) based on knowledge of the location of the second radio-coverage cell (Cell A).

2. Data processor (10; 10') according to claim 1, wherein said data processor (10; 10') is operable
   to detect a first plurality of communications from one or more mobile nodes via the first radio coverage cell at a respective plurality of first times,
   to detect a second plurality of communications from said one or more mobile nodes via radio-coverage cells which are different to the first radio-coverage cell at a respective plurality of second times,
   to determine that the difference between respective ones of the plurality of first times and the plurality of second times is less than the predetermined value, and
   to identify the location of the first radio-coverage cell based on knowledge of the location of the radio-coverage cells which are different to the first radio-coverage cell.

3. Data processor (10; 10') according to any of claims 1 to 2, wherein said data processor (10; 10') is operable to detect the communications from the mobile node from a transaction application part file generated by a mobile radio network to which the mobile node was affiliated, the transaction application part file including an indication of the radio-coverage cell via which the communication occurred.

4. Data processor (10; 10') according to any of claims 1 to 2, wherein said data processor (10; 10') is operable to detect the communications from the mobile node from signalling messages produced by a mobile radio network to which the mobile node was affiliated as a result of the communication from the mobile node, the signalling messages including an indication of the radio-coverage cell via which the communication occurred.

5. Data processor (10; 10') according to any of claims 1 to 4, wherein the one or more mobile radio networks are visited networks to which mobile nodes subscribed to a home network can become affiliated, and via which the mobile nodes may communicate.

6. A method of identifying the location of radio-coverage cells within one or more mobile radio networks, comprising detecting a communication from a mobile node (A) via a first radio-coverage cell (Cell Z) at a first time ($t_1$), detecting a communication from the mobile node via a second radio-coverage cell (Cell A) at a second time ($t_2$), **characterized in that** said method further comprises the steps of:
determining that the difference between the second time and the first time is less than a predetermined value ($T_{max}$), and if so
identifying the location of the first radio-coverage cell based on knowledge of the location of the second radio-coverage cell.

7. A method according to claim 6, wherein the mobile node is subscribed to a home network and visiting a visited network; the detected communication via a first radio coverage cell being a first area update message which is generated when a mobile node subscribed to the home network becomes affiliated to a radio-coverage cell associated with one of a first predetermined list of visitor location registers and which is communicated to the home location register of the home network of the mobile node, the first predetermined list of visitor location registers being associated with a first location, the detected communication via a second radio coverage cell being a second area update message which is generated when the mobile node becomes affiliated to a radio-coverage cell associated with one of a second predetermined list of visitor location registers and which is communicated to the home location register of the home network, the second predetermined list of visitor location registers being associated with a second location.

8. A method according to claim 7, further comprising identifying whether the mobile node is associated with a particular transport route in accordance with the determined time difference.

9. A computer program product providing computer executable instructions which when loaded onto a computer causes the computer to perform the method according to Claim 8.

10. A data carrier having a recording medium, the recording medium having recorded thereon a computer program according to Claim 9.

11. A signal representing the computer program product according to Claim 9.

12. A telecommunications system operable to provide a facility for mobile nodes to communicate via one or more mobile radio networks, comprising:

a data processor operable
to detect a communication from a mobile node (A) via a first radio-coverage cell (Cell Z) at a first time ($t_1$),
to detect a communication from the mobile node via a second radio-coverage cell (Cell A) at a second time ($t_2$),

**characterized in that** the telecommunication system is further operable
to determine that the difference between the second time and the first time is less than a predetermined value ($T_{max}$), and if so to identify the location of the first radio-coverage cell based on knowledge of the location of the second radio-coverage cell.

**Patentansprüche**

1. Datenprozessor (10; 10'), der betreibbar ist,
eine Kommunikation zu oder von einem mobilen Knoten (A) über eine erste Funkversorgungszelle (Zelle Z) zu einem ersten Zeitpunkt ($t_1$) zu detektieren und
eine Kommunikation zu oder von einem mobilen Knoten (A) über eine zweite Funkversorgungszelle (Zelle A) zu einem zweiten Zeitpunkt ($t_2$) zu detektieren,

**dadurch gekennzeichnet, dass** der Datenprozessor (10; 10') ferner betreibbar ist,
zu bestimmen, dass der Unterschied zwischen dem zweiten Zeitpunkt ($t_2$) und dem ersten Zeitpunkt ($t_1$) kleiner als ein vorgegebener Wert ($T_{max}$) ist, und wenn dem so ist,
den Ort der ersten Funkversorgungszelle (Zelle Z) anhand der Kenntnis des Ortes der zweiten Funkversorgungszelle (Zelle A) zu bestimmen.

2. Datenprozessor (10; 10') nach Anspruch 1, wobei der Datenprozessor (10; 10') betreibbar ist,
mehrere erste Kommunikationen von einem oder mehreren mobilen Knoten über die erste Funkversorgungszelle zu jeweiligen mehreren ersten Zeitpunkten zu detektieren,
mehrere zweite Kommunikationen von dem einen oder den mehreren mobilen Knoten über Funkversorgungszellen, die von der ersten Funkversorgungszelle verschieden sind, zu jeweiligen mehreren zweiten Zeitpunkten zu detektieren,
zu bestimmen, dass der Unterschied zwischen jeweiligen der mehreren ersten Zeitpunkte und der mehreren zweiten Zeitpunkte kleiner als der vorgegebene Wert ist, und
den Ort der ersten Funkversorgungszelle anhand der Kenntnis des Orts der Funkversorgungszellen, die von der ersten Funkversorgungszelle verschieden sind, zu identifizieren.

3. Datenprozessor (10; 10') nach einem der Ansprüche 1 bis 2, wobei der Datenprozessor (10; 10') betreibbar ist, die Kommunikationen von dem mobilen Knoten von einer Transaktionsanwendungsteildatei, die durch ein Mobilfunknetz erzeugt wird, an das der mobile Knoten angeschlossen war, zu detektieren, wobei die Transaktionsanwendungsteildatei eine Angabe der Funkversorgungszelle enthält, über die die Kommunikation stattfand.

4. Datenprozessor (10; 10') nach einem der Ansprüche 1 bis 2, wobei der Datenprozessor (10; 10') betreibbar ist, die Kommunikationen von dem mobilen Knoten von Signalisierungsnachrichten, die durch ein Mobilfunknetz, an das der mobile Knoten angeschlossen war, als ein Ergebnis der Kommunikation von dem mobilen Knoten erzeugt werden, zu detektieren, wobei die Signalisierungsnachrichten einen Angabe der Funkversorgungszelle, über die die Kommunikation stattfand, enthalten.

5. Datenprozessor (10; 10') nach einem der Ansprüche 1 bis 4, wobei das eine oder die mehreren Funknetze besuchte Netze sind, an das mobile Knoten, die in einem Heimnetz angemeldet sind, angeschlossen werden können, und über die die mobilen Knoten kommunizieren können.

6. Verfahren zum Identifizieren des Ortes von Funkversorgungszellen innerhalb eines oder mehrerer mobiler Funknetze, das umfasst:

   Detektieren einer Kommunikation von einem mobilen Knoten (A) über eine erste Funkversorgungszelle (Zelle Z) zu einem ersten Zeitpunkt ($t_1$),
   Detektieren einer Kommunikation von dem mobilen Knoten über eine zweite Funkversorgungszelle (Zelle A) zu einem zweiten Zeitpunkt ($t_2$),
   **dadurch gekennzeichnet, dass** das Verfahren ferner die folgenden Schritte umfasst:

   Bestimmen, dass der Unterschied zwischen dem zweiten Zeitpunkt und dem ersten Zeitpunkt kleiner als ein vorgegebener Wert ($T_{max}$) ist, und wenn dem so ist,
   Identifizieren des Ortes der ersten Funkversorgungszelle anhand der Kenntnis des Ortes der zweiten Funkversorgungszelle.

7. Verfahren nach Anspruch 6, wobei der mobile Knoten in einem Heimnetz angemeldet ist und ein besuchtes Netz besucht; wobei die detektierte Kommunikation über eine erste Funkversorgungszelle eine erste Bereichsaktualisierungsnachricht ist, die erzeugt wird, wenn ein mobiler Knoten, der in dem Heimnetz angemeldet ist, an eine Funkversorgungszelle, die einem Register in einer ersten vorgegebenen Liste von Besucherortsregistern zugeordnet ist, angeschlossen werden kann, und die an das Heimortsregister des Heimnetzes des mobilen Knotens kommuniziert wird, wobei die erste vorgegebene Liste von Besucherortsregistern einem ersten Ort zugeordnet ist, wobei die detektierte Kommunikation über eine zweite Funkversorgungszelle eine zweite Bereichsaktualisierungsnachricht ist, die erzeugt wird, wenn der mobile Knoten an eine Funkversorgungszelle angeschlossen wird, die einem einer zweiten vorgegebenen Liste von Besucherortsregistern zugeordnet ist, und die an das Heimortsregister des Heimnetzes kommuniziert wird, wobei die zweite vorgegebene Liste der Besucherortsregister einem zweiten Ort zugeordnet ist.

8. Verfahren nach Anspruch 7, das ferner umfasst, zu identifizieren, ob der mobile Knoten einer bestimmten Transportroute zugeordnet ist, in Übereinstimmung mit dem bestimmten Zeitunterschied.

9. Computerprogrammprodukt, das computerausführbare Anweisungen bereitstellt, die dann, wenn sie in einen Computer geladen werden, bewirken, dass der Computer das Verfahren nach Anspruch 8 ausführt.

10. Datenträger mit einem Aufzeichnungsmedium, wobei das Aufzeichnungsmedium ein auf ihm aufgezeichnetes Computerprogramm nach Anspruch 9 besitzt.

11. Signal, das das Computerprogrammprodukt nach Anspruch 9 repräsentiert.

12. Telekommunikationssystem, das betreibbar ist, eine Einrichtung für mobile Knoten bereitzustellen, um über ein oder mehrere Mobilfunknetze zu kommunizieren, und das Folgendes umfasst:

einen Datenprozessor, der betreibbar ist,
eine Kommunikation von einem mobilen Knoten (A) über eine erste Funkversorgungszelle (Zelle Z) zu einem ersten Zeitpunkt ($t_1$) zu detektieren,
eine Kommunikation von dem mobilen Knoten (A) über eine zweite Funkversorgungszelle (Zelle A) zu einem zweiten Zeitpunkt ($t_2$) zu detektieren,
**dadurch gekennzeichnet, dass** das Telekommunikationssystem ferner betreibbar ist,
zu bestimmen, dass der Unterschied zwischen dem zweiten Zeitpunkt und dem ersten Zeitpunkt kleiner als ein vorgegebener Wert ($T_{max}$) ist, und wenn dem so ist,
den Ort der ersten Funkversorgungszelle anhand der Kenntnis des Ortes der zweiten Funkversorgungszelle zu bestimmen.

**Revendications**

1. Processeur de données (10 ; 10') utilisable pour
détecter une communication à destination ou en provenance d'un noeud mobile (A) via une première cellule de couverture radio (Cell Z) à un premier instant ($t_1$),
détecter une communication à destination ou en provenance du noeud mobile (A) via une deuxième cellule de couverture radio (Cell A) à un deuxième instant ($t_2$),
ledit processeur de données (10 ; 10') étant **caractérisé en ce qu'**il est utilisable en outre pour
déterminer que la différence entre le deuxième instant ($t_2$) et le premier instant ($t_1$) est inférieure à une valeur prédéterminée ($T_{max}$) et, le cas échéant, pour
identifier la localisation de la première cellule de couverture radio (Cell Z) en se basant sur la connaissance de la localisation de la deuxième cellule de couverture radio (Cell A).

2. Processeur de données (10 ; 10') selon la revendication 1, ledit processeur de données (10 ; 10') étant utilisable pour
détecter une première pluralité de communications en provenance d'un ou de plusieurs noeuds mobiles via la première cellule de couverture radio à une pluralité respective de premiers instants,
détecter une deuxième pluralité de communications en provenance desdits un ou plusieurs noeuds mobiles via des cellules de couverture radio différentes de la première cellule de couverture radio à une pluralité respective de deuxièmes instants,
déterminer que la différence entre des instants respectifs de la pluralité de premiers instants et de la pluralité de deuxièmes instants est inférieure à la valeur prédéterminée, et
identifier la localisation de la première cellule de couverture radio en se basant sur la connaissance de la localisation des cellules de couverture radio différentes de la première cellule de couverture radio.

3. Processeur de données (10 ; 10') selon l'une quelconque des revendications 1 et 2, ledit processeur de données (10 ; 10') étant utilisable pour détecter des communications en provenance du noeud mobile à partir d'un fichier de sous-système d'application de transactions généré par un réseau radio mobile auquel le noeud mobile a été affilié, le fichier de sous-système d'application de transactions contenant une indication de la cellule de couverture radio via laquelle la communication a eu lieu.

4. Processeur de données (10 ; 10') selon l'une quelconque des revendications 1 et 2, ledit processeur de données (10 ; 10') étant utilisable pour détecter les communications en provenance du noeud mobile à partir de messages de signalisation produits par un réseau radio mobile auquel le noeud mobile a été affilié par suite à la communication en provenance du noeud mobile, les messages de signalisation contenant une indication de la cellule de couverture radio via laquelle la communication a eu lieu.

5. Processeur de données (10 ; 10') selon l'une quelconque des revendications 1 à 4, dans lequel le ou les réseaux radio mobiles sont des réseaux visités auxquels des noeuds mobiles rattachés à un réseau nominal peuvent s'affilier et via lesquels les noeuds mobiles sont susceptibles de communiquer.

6. Procédé d'identification de la localisation de cellules de couverture radio au sein d'un ou de plusieurs réseaux radio mobiles, comprenant les étapes suivantes :

   détection d'une communication en provenance d'un noeud mobile (A) via une première cellule de couverture radio (Cell Z) à un premier instant ($t_1$),
   détection d'une communication en provenance du noeud mobile via une deuxième cellule de couverture radio (Cell A) à un deuxième instant ($t_2$),
   ledit procédé étant **caractérisé en ce qu'**il comprend en outre les étapes suivantes :

   détermination que la différence entre le deuxième instant et le premier instant est inférieure à une valeur prédéterminée ($T_{max}$) et, le cas échéant,
   identification de la localisation de la première cellule de couverture radio sur la base de la connaissance de la localisation de la deuxième cellule de couverture radio.

7. Procédé selon la revendication 6, dans lequel le noeud mobile est rattaché à un réseau nominal et visite un réseau visité ; la communication détectée via une première cellule de couverture radio étant un premier message de mise à jour de zone qui est généré lorsqu'un noeud mobile rattaché au réseau nominal s'affilie à une cellule de couverture radio associée à l'un d'une première liste prédéterminée d'enregistreurs de localisation de visiteurs et qui est communiqué à l'enregistreur de localisation nominal du réseau nominal du noeud mobile, la première liste prédéterminée d'enregistreurs de localisation de visiteurs étant associée à une première localisation, la communication détectée via une deuxième cellule de couverture radio étant un deuxième message de mise à jour de zone qui est généré lorsque le noeud mobile s'affilie à une cellule de couverture radio associée à l'un d'une deuxième liste prédéterminée d'enregistreurs de localisation de visiteurs et qui est communiqué à l'enregistreur de localisation nominal du réseau nominal, la deuxième liste prédéterminée d'enregistreurs de localisation de visiteurs étant associée à une deuxième localisation.

8. Procédé selon la revendication 7, comprenant en outre une étape d'identification si le noeud mobile est associé à un itinéraire de transport particulier en fonction de la différence d'instants déterminée.

9. Produit-programme d'ordinateur fournissant des instructions exécutables par ordinateur qui, une fois chargées sur un ordinateur, amènent l'ordinateur à réaliser le procédé selon la revendication 8.

10. Support de données doté d'un support d'enregistrement, support d'enregistrement sur lequel est enregistré un programme d'ordinateur selon la revendication 9.

11. Signal représentant le produit-programme d'ordinateur selon la revendication 9.

12. Système de télécommunication utilisable pour fournir à des noeuds mobiles un moyen de communiquer via un ou plusieurs réseaux radio mobiles, comprenant :

   un processeur de données utilisable pour
   détecter une communication en provenance d'un noeud mobile (A) via une première cellule de couverture radio (Cell Z) à un premier instant ($t_1$),
   détecter une communication en provenance du noeud mobile via une deuxième cellule de couverture radio (Cell A) à un deuxième instant ($t_2$),
   le système de télécommunication étant **caractérisé en ce qu'**il est utilisable en outre pour
   déterminer que la différence entre le deuxième instant et le premier instant est inférieure à une valeur prédéterminée ($T_{max}$) et, le cas échéant, pour
   identifier la localisation de la première cellule de couverture radio en se basant sur la connaissance de la localisation de la deuxième cellule de couverture radio.

Fig. 1

Fig. 2

Fig. 3

Call 1 (t₁)

CellId
(1)

A

Visited
Network 1

*Subscriber A
Mobility*

Home
Network

SS7
or
TAP

CellId
(2)

A

Call 2 (t₂)

Visited
Network 2

Fig. 4

B

A    C

Affiliate. network

Z

Competitor network

Fig. 5

Fig. 6

Fig. 7

613

LBS Server   S23

CI – X,Y   614

S28

S21   S22   S24   S27

HLR   615

LBS client   611

S25   S26

Visited
Network

VLR   616

610

Fig. 8

VLR1

LAC 1.1   LAC 1.2   LAC 1.3

CI
1.1.1   CI
1.1.2   CI
1.2.1   CI
1.2.2   CI
1.3.1   CI
1.3.2

Fig. 9

| Count of VLRs, LACs and Cell IDs by network (MNC) | | | |
|---|---|---|---|
| MNC | Count of VLRs | Count of LACs | Count of Cell IDs |
| 01 | 56 | 270 | 42007 |
| 02 | 12 | 12 | 89 |
| 10 | 92 | 165 | 8587 |
| 13 | 45 | 123 | 19283 |
| 20 | 1 | 9 | 76 |
| 88 | 6 | 18 | 53 |

Fig. 10

{VLR in} ←——— Δt ———→ {VLR out}

VLR1 Op1 —————————— VLR4 Op1

VLR2 Op2    VLR5 Op2

VLR3 Op3    VLR6 Op3

Fig. 11

Δt

Brussels

Paris

VLR in

VLR out

France    Belgium

Fig. 12

Delta time

{VLR in}    {VLR out}

VLR Op1    VLR Op1

VLR Op2    "No Previous Mobility"    VLR Op2

VLR Op3    VLR Op3

Fig. 18

b

S41

Mobile moves
And
VLR changes

S42

SS7
Signalling

S46

No / VLR
OUT

S45

No / VLR
IN ?

Location
update

S44

No

Yes

Yes

S48 — Add IMSI
to VLR OUT
Database

Add IMSI
to VLR IN
Database

S47

Data Retrieval

---

Data analysis

S49 — Correlate VLR IN Database
with VLR OUT Database
with respect to IMSI

Detect Mobile
nodes for which
$t(out) - t(in) = T_{trans} \pm T_{std}$

S50

Fig 13

Fig. 14

Fig 15

| Market Share Analysis | | | |
|---|---|---|---|
| Network | National Share | Train Share | Train/National |
| Operator 1 | 3.50% | 7.00% | 199.85 |
| Operator 2 | 12.05% | 12.76% | 105.91 |
| Operator 3 | 84.45% | 80.25% | 95.02 |

Fig. 16

Fig 17

**EP 1 887 820 B1**

REFERENCES CITED IN THE DESCRIPTION

**Patent documents cited in the description**

- GB 2415576 A
- WO 02071781 A
- US 2002082017 A

**Non-patent literature cited in the description**

- **R. STEELE et al.** GSM, CDMA1 and 3G systems. John Wiley & Sons